# EUROPEAN PATENT SPECIFICATION

(11) **EP 3 451 474 B1**
(45) Date of publication and mention of the grant of the patent: **24.06.2020**
(21) Application number: 17189485.0
(22) Date of filing: 05.09.2017
(51) Int. Cl.: H02B 13/035, H02G 5/02

(54) **FIXATION SYSTEM WITH A CABLE- OR BUSBAR- BUSHING, AND METHOD OF ASSEMBLING OF THE SAME**
FIXIERUNGSSYSTEM MIT EINER KABEL- ODER SAMMELSCHIENENBUCHSE UND MONTAGEVERFAHREN DAVON
SYSTÈME DE FIXATION AVEC UNE DOUILLE DE CÂBLE OU DE BARRE OMNIBUS ET SON PROCÉDÉ D'ASSEMBLAGE

(43) Date of publication of application: 06.03.2019
(73) Proprietor: ABB Schweiz AG, 5400 Baden (CH)
(72) Inventor: Claus, Oliver, 40885 Ratingen (DE)
(74) Representative: Maiwald Patent- und Rechtsanwaltsgesellschaft mbH

(56) References cited:
- EP-A1- 2 117 015
- NZ-A- 247 222

## Description

The Invention relates to a fixation system for and with a cable- or busbar-bushing through the housing wall of a medium voltage switchgear, with a gasket and a grading shield between the busbar and the opening in the housing wall, and a method of assembling of the same, according to the preamble of claim 1.

A bushing for a busbar in medium voltage switchgears is well known, for example from the EP2117015 A1 or DE 36 24 499 A1. There is used a shielding element made of conductive material and a gasket. The shielding element surrounds the busbar and the gasket seals the opening, through which the busbar is guided via the bushing.

The fixation of the bushing normally uses screws, screw nuts, welding or pressing.

This results in a number of disadvantages, which are
- major expenditure of time during assembly
- higher quality of components
- higher complexity for the production of the component, by the use of more inserts
- logistic process
- more difficulties for an automated assembly process

Document NZ247222 discloses a seal around a cable, attachable to a telecommunications cabinet by a bayonet fitting, with no shielding element.

So the object of the invention is, to overcome these disadvantages by constructive simplification of the fixation, by simultaneously realizing high insulation performance.

According to a fixation system, these requirements are solved/fulfilled by the invention, with the features of claim 1.

Further advantageous embodiments are given by the depending claims 2 to 10.

A method of assembling such a fixation system is given by claim 11.

The invention is, that the gasket and the grading shield are parts of a bayonet flange, which corresponds with an opening in the medium voltage switchgear housing wall, wherein the aforesaid opening in the housing wall of the switchgear comprise at its inner circumferential border line at least one complementary slit to the bayonet flange, in such, that the busbar with grading shield and gasket can be fixed in the aforesaid opening in the housing of the switchgear.

This results in a fixation system which uses only few elements for a sure fixation.

In a further advantageous embodiment, at least two complementary slits are implemented in the opening of the housing of the switchgear. By that the fixation forces can be distributed symmetrically.

In a further advantageous embodiment, at least four complementary slits are implemented in the opening of the housing of the switchgear. By that the fixation forces can be distributed even more symmetrically.

In an advantageous embodiment, the gasket is divided into two separate parts which can be fixed together, in such, that the first part is the gasket for tight sealing, and the second part is a clamping flange.

In a further advantageous embodiment, a sealing element and a clamping flange are provided as integral parts of the gasket.

Furthermore, the clamping flange is made of metallic material.

Alternatively, the clamping flange is made of thermoplastic material.

In a further advantageous embodiment, the thermoplastic material is polyphenylene sulfide or polybutylene terephthalate, with excellent mechanical, dielectric and material properties.

In a further advantageous embodiment, the fixation system is provided with an electrical field control sensor.

As advantageous feature, the fixation system is provided with an electrical field control sensor, and the electrical field control sensor is integral part of the gasket or the grading shield.

According to the method of assembling such a fixation system for fixation of a busbar bushing, the invention is, that the gasket and the grading shield are part of a bayonet flange, which corresponds with an opening in the medium voltage switchgear housing wall, wherein the aforesaid opening in the housing wall of the switchgear comprise at its inner circumferential border line at least one complementary slit to the bayonet, so that the busbar or cable together with the grading shield and gasket can be fixed in the aforesaid opening in the housing of the switchgear in a first step by inserting the busbar or the cable together with the gasket and grading shield into the aforesaid opening, and in a second and final step, by rotating it until the bayonet's fixation element and the complementary slit are locked in end position.

An embodiment of the invention is shown in the drawing.
Figure 1 Two versions of an embodiment in perspective view
Figure 2 State of the art

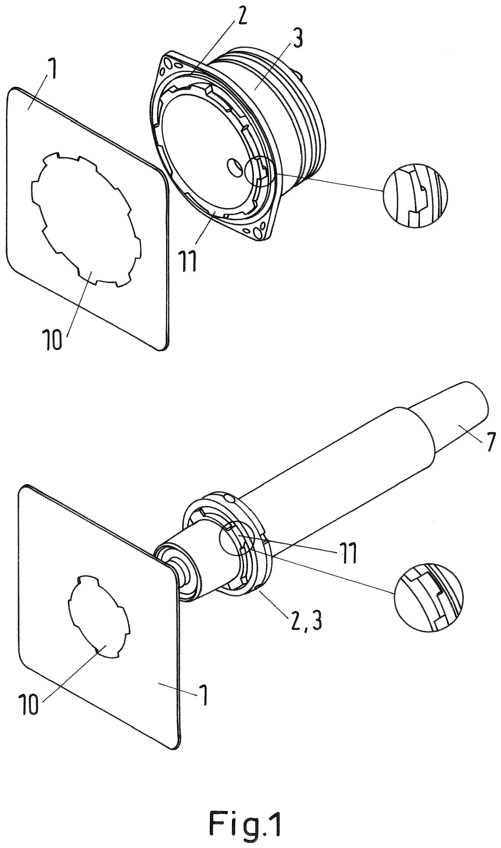

Figure 1 shows an embodiment of the invention, in which the gasket and the grading shield are part of a bayonet flange, with complementary fixation elements 11, which correspond with complementary slits 10 in the circumferential line of the opening in the housing wall 1. The aforesaid bayonet flange is positioned on the busbar 7, and then the bayonet flange will be fixed in the aforesaid wall opening in the wall 1, and turned in such, that both fixation elements of the bayonet will be fixed in the opening of the wall 1.

To fasten a compenent, such as a busbar- or cable bushing by rotation of the part on for this purpose provided surface, a correct positioning and sealing is achieved. It is enabled by a flange with an applicable bayonet geometry on the one side and an adjusted shape at the part where it is fastened with on the other side.

This fixation is much more easier, and much quicker installed, than fixations in the state of the art.

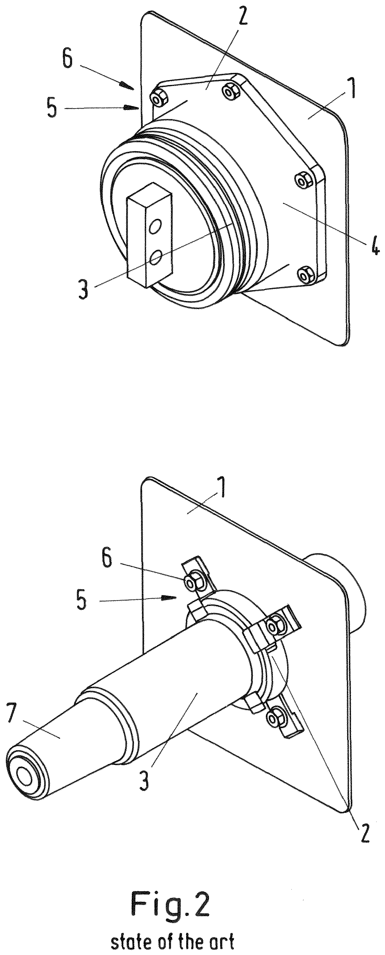

Figure 2 shows a fixation system in the state of the art, for and with a cable- or busbar- bushing through the housing wall 1 of a medium voltage switchgear, with a gasket 2 and a grading shield 3 between the busbar 7 and the opening in the housing wall.

The Gasket is screwed on the housing wall 1 with a washer and nut system 6, which also fix the grading shield.

### Reference signs

- 1: wall
- 2: gasket
- 3: grading shield
- 4: mounting flange
- 5: stud
- 6: washer, nut
- 7: busbar
- 10, 11: complementary fixation elements of the bayonet

## Claims

1. Fixation system for and with a cable- or busbar- bushing through the housing wall (1) of a medium voltage switchgear, with a gasket (2) and a grading shield (3) between the cable or busbar and the opening in the housing wall,
**characterized in,**
**that** the gasket (2) and the grading shield (3) are part of a bayonet flange, which corresponds with an opening in the medium voltage switchgear housing wall, wherein the aforesaid opening in the housing wall of the switchgear comprises at its inner circumferential border line at least one complementary slit (10) to a fixation element (11) of the bayonet flange, such that the cable- or busbar-bushing with the grading shield and gasket can be fixed in the aforesaid opening in the housing of the switchgear.

2. Fixation system, according to claim 1,
**characterized in**
**that** at least two complementary slits are implemented in the opening of the housing of the switchgear.

3. Fixation system, according to claim 1,
**characterized in**
**that** at least four complementary slits are implemented in the opening of the housing of the switchgear.

4. Fixation system, according to one of the aforesaid claims 1 to 3,
**characterized in**
**that** the gasket is divided into two separate parts which can be fixed together, in such, that the first part is the gasket for tight sealing, and the second part is a clamping flange.

5. Fixation system, according to one of the aforesaid claims 1 to 3,
**characterized in**
**that** a sealing element and a clamping flange are integral parts of the gasket.

6. Fixation system, according to claim 4,
**characterized in**
**that** the clamping flange is made of metallic material.

7. Fixation system, according to claim 4 or 5,
**characterized in**
**that** the clamping flange is made of thermoplastic material.

8. Fixation system, according to claim 7,
**characterized in**
**that** the thermoplastic material is polyphenylene sulfide or polybutylene terephthalate.

9. Fixation system, according to one of the aforesaid claims,
**characterized in**
**that** the fixation system is provided with an electrical field control sensor.

10. Fixation system, according to claim 9,
**characterized in**
**that** the electrical field control sensor is integral part of the gasket or the grading shield.

11. Method of assembling a busbar or cable with a busbar- or cable-bushing in an opening of in a housing wall of a switchgear, with the fixation system according to claim 1, **characterized in that** the busbar or cable bushing together with the grading shield and gasket can be fixed in the aforesaid opening in the housing of the switchgear in a first step by inserting the busbar or the cable bushing together with the gasket and grading shield of the bayonet flange into the aforesaid opening, and in a second and final step, by rotating it until the bayonet's fixation element and the complemantary slit are locked in end position.

## Patentansprüche

1. Fixierungssystem für und mit einer Kabel- oder Sammelschienenbuchse durch die Gehäusewand (1) einer Mittelspannungsschaltanlage, mit einer Dichtung (2) und einer abstufenden Abschirmung (3) zwischen dem Kabel oder der Sammelschiene und der Öffnung in der Gehäusewand,
**dadurch gekennzeichnet,**
**dass** die Dichtung (2) und die abstufende Abschirmung (3) Teil eines Bajonettflanschs sind, der einer Öffnung in der Gehäusewand der Mittelspannungsschaltanlage entspricht, wobei die Öffnung in der Gehäusewand der Schaltanlage an ihrer inneren Umfangsgrenzlinie mindestens einen zu einem Fixierungselement (11) des Bajonettflanschs komplementären Schlitz (10) umfasst, sodass die Kabel- oder Sammelschienenbuchse mit der abstufenden Abschirmung und der Dichtung in der Öffnung in dem Gehäuse der Schaltanlage fixiert werden kann.

2. Fixierungssystem nach Anspruch 1,
**dadurch gekennzeichnet,**
**dass** mindestens zwei komplementäre Schlitze in der Öffnung des Gehäuses der Schaltanlage eingerichtet sind.

3. Fixierungssystem nach Anspruch 1,
**dadurch gekennzeichnet,**
**dass** mindestens vier komplementäre Schlitze in der Öffnung des Gehäuses der Schaltanlage eingerichtet sind.

4. Fixierungssystem nach einem der vorhergehenden Ansprüche 1 bis 3,
**dadurch gekennzeichnet,**
**dass** die Dichtung in zwei getrennte Teile, die zusammen fixiert werden können, derart aufgeteilt ist, dass der erste Teil die Dichtung für eine sichere Abdichtung ist, und der zweite Teil ein Klemmflansch ist.

5. Fixierungssystem nach einem der vorhergehenden Ansprüche 1 bis 3,
**dadurch gekennzeichnet,**
**dass** ein Dichtelement und ein Klemmflansch integrale Bestandteile der Dichtung sind.

6. Fixierungssystem nach Anspruch 4,
**dadurch gekennzeichnet,**
**dass** der Klemmflansch aus einem metallischen Material hergestellt ist.

7. Fixierungssystem nach Anspruch 4 oder 5,
**dadurch gekennzeichnet,**
**dass** der Klemmflansch aus einem thermoplastischen Material hergestellt ist.

8. Fixierungssystem nach Anspruch 7,
**dadurch gekennzeichnet,**
**dass** das thermoplastische Material Polyphenylensulfid oder Polybutylenterephthalat ist.

9. Fixierungssystem nach einem der vorhergehenden Ansprüche,
**dadurch gekennzeichnet,**
**dass** das Fixierungssystem mit einem elektrischen Feldsteuerungssensor bereitgestellt wird.

10. Fixierungssystem nach Anspruch 9,
**dadurch gekennzeichnet,**
**dass** der elektrische Feldsteuerungssensor ein integraler Bestandteil der Dichtung oder der abstufenden Abschirmung ist.

11. Verfahren zum Montieren einer Sammelschiene oder eines Kabels mit einer Sammelschienen- oder Kabelbuchse in eine Öffnung in einer Gehäusewand einer Schaltanlage mithilfe des Fixierungssystems nach Anspruch 1,
**dadurch gekennzeichnet, dass**
die Sammelschienen- oder Kabelbuchse zusammen mit der abstufenden Abschirmung und der Dichtung in der Öffnung in dem Gehäuse der Schaltanlage in einem ersten Schritt eines Einfügens der Sammelschienen- oder Kabelbuchse zusammen mit der Dichtung und der abstufenden Abschirmung des Bajonettflanschs in die Öffnung und in einem zweiten und abschließenden Schritt eines Drehens derselben bis das Fixierungselement des Bajonettflanschs und der komplementäre Schlitz in einer Endposition verriegelt sind, fixiert werden kann.

## Revendications

1. Système de fixation pour et avec une traversée de câble ou de barre omnibus à travers la paroi de logement (1) d'un appareillage de commutation à moyenne tension, avec un joint (2) et un anneau de garde (3) entre le câble ou la barre omnibus et l'ouverture dans la paroi de logement,
**caractérisé en ce**
**que** le joint (2) et l'anneau de garde (3) font partie d'une bride à baïonnette, qui correspond à une ouverture dans la paroi de logement d'appareillage de commutation à moyenne tension, dans lequel l'ouverture susdite dans la paroi de logement de l'appareillage de commutation comprend, à sa ligne de bordure circonférentielle intérieure, au moins une fente complémentaire (10) à un élément de fixation (11) de la bride à baïonnette, de telle sorte que la traversée de câble ou de barre omnibus avec l'anneau de garde et le joint puissent être fixés dans l'ouverture susdite dans le logement de l'appareillage de commutation.

2. Système de fixation, selon la revendication 1,
**caractérisé en ce**
**qu'**au moins deux fentes complémentaires sont appliquées dans l'ouverture du logement de l'appareillage de commutation.

3. Système de fixation selon la revendication 1,
**caractérisé en ce**
**qu'**au moins quatre fentes complémentaires sont appliquées dans l'ouverture du logement de l'appareillage de commutation.

4. Système de fixation selon l'une des revendications précédentes 1 à 3,
**caractérisé en ce**
**que** le joint est divisé en deux pièces séparées qui peuvent être fixées ensemble, de manière telle que la première partie soit le joint pour l'étanchéité, et la seconde partie soit une bride de serrage.

5. Système de fixation selon l'une des revendications précédentes 1 à 3,
**caractérisé en ce**
**qu'**un élément d'étanchéité et une bride de serrage sont des parties intégrantes du joint.

6. Système de fixation selon la revendication 4,
**caractérisé en ce**
**que** la bride de serrage est faite de matériau métallique.

7. Système de fixation selon la revendication 4 ou 5,
**caractérisé en ce**
**que** la bride de serrage est faite de matériau thermoplastique.

8. Système de fixation selon la revendication 7,
**caractérisé en ce**
**que** le matériau thermoplastique est du sulfure de polyphénylène ou de polybutylène téréphtalate.

9. Système de fixation selon l'une des revendications précédentes,
**caractérisé en ce**
**que** le système de fixation est pourvu d'un capteur de commande de champ électrique.

10. Système de fixation selon la revendication 9,
**caractérisé en ce**
**que** le capteur de commande de champ électrique est une partie intégrante du joint ou de l'anneau de garde.

11. Procédé d'assemblage d'une barre omnibus ou d'un câble avec une traversée de barre omnibus ou de câble dans une ouverture dans une paroi d'un appareillage de commutation, avec le système de fixation selon la revendication 1,
**caractérisé en ce**
**que** la traversée de barre omnibus ou de câble conjointement avec l'anneau de garde et le joint peuvent être fixés dans l'ouverture susdite dans le logement de l'appareillage de commutation dans une première étape en insérant la traversée de barre omnibus ou de câble conjointement avec le joint et l'anneau de garde de la bride à baïonnette dans l'ouverture susdite, et, dans une seconde étape finale, en la faisant tourner jusqu'à ce que l'élément de fixation de la baïonnette et la fente complémentaire soient verrouillés en position finale.
